Europäisches Patentamt

European Patent Office

Office européen des brevets

(11) Veröffentlichungsnummer: **0 419 985 A1**

(12) **EUROPÄISCHE PATENTANMELDUNG**

(21) Anmeldenummer: 90117817.8

(51) Int. Cl.⁵: **B60J 7/04**

(22) Anmeldetag: **15.09.90**

(30) Priorität: **27.09.89 DE 3932207**

(43) Veröffentlichungstag der Anmeldung:
**03.04.91 Patentblatt 91/14**

(84) Benannte Vertragsstaaten:
**DE ES FR GB IT NL SE**

(71) Anmelder: **Webasto AG Fahrzeugtechnik
Kraillingerstrasse 5
W-8035 Stockdorf(DE)**

(72) Erfinder: **Kittelmann, Ralf
Planeggerstrasse 10
W-8000 München 60(DE)**
Erfinder: **Igel, Richard**
**Planeggerstrasse 68c
W-8034 Germering(DE)**
Erfinder: **Lutz, Alfons
Nordendstrasse 68
W-8080 Emmering(DE)**
Erfinder: **Wienchol, Otto
Wolfratshauserstrasse 5
W-8023 Pullach(DE)**
Erfinder: **Ulbrich, Thomas
Steinbergstrasse 23
W-8034 Germering(DE)**
Erfinder: **Salz, Wolfram
Gautingerstrasse 3
W-8035 Stockdorf(DE)**

(54) **Schiebedach und/oder Schiebehebedach, insbesondere für Kraftfahrzeuge.**

(57) Für ein Schiebedach und/oder ein Schiebehebedach wird eine Sichtblende (14) angegeben, welche einen Spalt (C) zwischen der Unterseite eines Deckels (6) und einer Führungsschiene (5) eines solchen Dachs verdeckt. Die Sichtblende (14) ist als Balgenteil (15) ausgebildet, welches Balgenabschnitte (16) und Übergangsabschnitte (17) umfaßt, wobei die Übergangsabschnitte (17) im Querschnitt wesentlich dünner als die Balgenabschnitte (16) bemessen sind und vorzugsweise von dünnen Stegteilen (19) gebildet werden, die als Scharniere zwischen jeweils zwei aufeinanderfolgender Balgenabschnitten (16) wirken. Hierdurch werden sowohl die Betätigungskräfte zum Auseinanderziehen des Balgenteils (15) möglichst gering gehalten, als auch die Bauhöhe des Balgenteils (15) im zusammengedrückten Zustand im Vergleich zu bisher üblichen Ausführungsformen reduziert. Das der Unterseite des Deckels (6) zugewandte obere Ende des Balgenteils (15) und/oder das der Führungsschiene (5) zugewandte untere Ende des Balgenteils (15) kann zur Erhöhung der Eigensteifigkeit verdickt ausgeführt sein. Zweckmäßigerweise wird der Balgenteil (15) in seine jeweilige Spreizstellung durch eine Federkraft gedrückt, die beispielsweise von einem Federelement (24) aufgebracht wird, das mit den oberen und unteren Enden des Balgenteils (15) zusammenarbeitet.

FIG. 2

# SCHIEBEDACH UND/ODER SCHIEBEHEBEDACH, INSBESONDERE FÜR KRAFTFAHRZEUGE

Die Erfindung betrifft ein Schiebedach und/oder Schiebehebedach, insbesondere für Kraftfahrzeuge, mit einer im festen Dachteil ausgebildeten Dachöffnung, an gegenüberliegenden Seiten der Dachöffnung verlaufenden Führungsschienen und einem Deckel, der in seiner Schließstellung die Dachöffnung verschließt, der nach Absenken seiner Hinterkante entlang den Führungsschienen mindestens teilweise unter das feste Dachteil schiebbar ist und der gegebenenfalls wahlweise mit seiner Hinterkante über das feste Dachteil ausstellbar ist, wobei an beiden Seiten des Deckels eine sich beim Verstellen der Deckelhinterkante in lotrechter Richtung flexibel verformende Sichtblende in Form eines ziehharmonikaartigen Faltenbalgenteils mit längs verlaufenden Balgenfalten zum Abdecken eines zwischen der Deckelunterseite und den Führungsschienen gebildeten Spalts angebracht ist.

Aus DE-PS 33 08 065 sind ein Schiebedach und ein Schiebehebedach mit einer flexiblen Sichtblende der vorstehend genannten Art bekannt. Der Faltenbalgenteil hat hierbei im Querschnitt eine einheitliche Wandstärke und der Balgenteil hat längsverlaufende Balgenfalten, so daß dieser Balgen entsprechend der Höhenlage des Deckels auseinandergezogen oder zusammengedrückt werden kann, um einen Spalt zwischen der Deckelunterseite und den Führungsschienen abzudecken, so daß die dort liegenden Funktionsteile nicht sichtbar sind. Da sich die Faltenbalgenabschnitte zwischen den Balgenfalten ziehharmonikaartig im zu sammengedrückten Zustand jeweils abwechselnd innen und außen krümmen und der Balgenteil insgesamt eine einheitliche Querschnittsstärke hat, sind die Faltenbalgenteile an den Balgenfalten über einen Übergangsradius untereinander verbunden, so daß im vollständig zusammengedrückten Zustand des Faltenbalgenteils die Höhe desselben durch die an den Balgenfalten gebildeten Übergangsradiusteile und die Anzahl der jeweiligen Wandstärken der Balgenabschnitte bestimmt ist. Dies bedeutet, daß die Faltenbalgenabschnitte im zusammengedrückten Zustand nicht vollständig flächig in Höhenrichtung aufeinanderliegen. Daher hat der bekannte Faltenbalgenteil aufgrund der Übergangsradiusabschnitte an den längs verlaufenden Balgenfalten eine relativ große Bauhöhe, so daß sich Schwierigkeiten hierbei insbesondere bei sogenannten flach bauenden Schiebedächern und/oder Schiebehebedächern ergeben.

Die Erfindung zielt darauf ab, ein Schiebedach und/oder ein Schiebehebedach, das insbesondere für Kraftfahrzeuge bestimmt ist, bereitzustellen, bei dem eine Sichtblende mit möglichst geringer Bauhöhe vorgesehen ist.

Nach der Erfindung zeichnet sich ein Schiebedach und/oder Schiebehebedach, insbesondere für Kraftfahrzeuge, mit einer im festen Dachteil ausgebildeten Dachöffnung, an gegenüberliegenden Seiten der Dachöffnung verlaufenden Führungsschienen und einem Deckel, der in seiner Schließstellung die Dachöffnung verschließt, der nach Absenken seiner Hinterkante entlang den Führungsschienen mindestens teilweise unter das feste Dachteil schiebbar ist und der gegebenenfalls wahlweise mit seiner Hinterkante über das feste Dachteil ausstellbar ist, wobei an beiden Seiten des Deckels eine sich beim Verstellen der Deckelhinterkante in lotrechter Richtung flexibel verformende Sichtblende in Form eines ziehharmonikaartigen Faltenbalgteils mit längs verlaufenden Balgenfalten zum Abdecken eines zwischen der Deckelunterseite und den Führungsschienen gebildeten Spalts angebracht ist, dadurch aus, daß die längsverlaufenden Balgenfalten von im Vergleich zu den Balgenabschnitten im Querschnitt dünneren Übergangsabschnitten zwischen jeweils zwei aufeinanderfolgenden Balgenabschnitten gebildet werden.

Bei diesem erfindungsgemäß ausgelegten Schiebedach und/oder Schiebehebedach ist die Wandstärke des Balgenteils nicht einheitlich, sondern die jeweils aufeinanderfolgenden Balgenabschnitte sind über im Querschnitt dünner bemessene Übergangsabschnitte verbunden, welche die längs verlaufenden Balgenfalten bilden. Hierdurch erhält man eine Sichtblende mit kleinerer Bauhöhe als bisher üblich, wenn der Balgenteil sich im zusammengedrückten Zustand befindet, da gerade in diesem Zustand die Balgenabschnitte flächig direkt aufeinander aufliegen, so daß die Bauhöhe des Faltenbalgteils der Sichtblende im wesentlichen nur durch die Wandstärke und die Anzahl der Balgenabschnitte bestimmt ist, während die im Querschnitt dünner bemessenen Übergangsabschnitte keinen Einfluß auf die Bauhöhe der Sichtblende haben.

Vorzugsweise sind die Übergangsabschnitte als dünne, scharnierartig wirkende Stegteile ausgebildet, so daß das gesamte Faltenbalgenteil als einstückiges Teil ausgebildet werden kann und die Stegteile Verbindungsstege zwischen jeweils benachbarten Balgenabschnitten bilden.

Vorzugsweise ist die Auslegung der Sichtblende beim erfindungsgemäßen Schiebedach und/oder Schiebehebedach derart getroffen, daß die Balgenabschnitte des Faltenbalgenteils in zusammengedrücktem Zustand flächig aufeinanderliegen, wodurch auch die Seitenstabilität des Faltenbalgenteils verbessert wird.

Gemäß einer bevorzugten Ausgestaltungsform sind das der Führungsschiene zugewandte untere Ende und/oder das der Deckel unterseite zugewandte obere Ende des Balgenteils auch gegenüber den Balgenabschnitten verdickt ausgebildet, da wenigstens eines dieser Enden als Halterung und das jeweils andere als Anlagefläche dient, so daß diese Enden in sich starrer und steifer sind, um ihre bestimmungsgemäße Funktion zuverlässig zu erfüllen.

Gemäß einer bevorzugten Ausführungsform ist das untere Ende des Balgenteils, welches verdickt ausgebildet ist, an einem Führungsbügel gehalten, der nur am vorderen Teil an der Deckelunterseite oder Deckelinnenseite befestigt ist. Durch diese Verbindung des Balgenteils über den Führungsbügel mit dem Deckel wird das die Sichtblende bildende Balgenteil jeweils bei der Verschiebebewegung und/oder der Ausstellbewegung des Deckels zwangsläufig mitgenommen, wobei man auf diese Weise eine konstruktiv äußerst einfache Verbindung mit dem beweglichen Deckelteil und der Sichtblende erhält.

Gemäß einer vorteilhaften weiteren Ausgestaltungsform nach der Erfindung wird zur vereinfachten Montage der vom Balgenteil gebildeten Sichtblende die Auslegung derart getroffen, daß der Faltenbalgenteil selbsttätig an die jeweils erforderliche Ausziehstellung derart gepreßt wird, daß der zwischen dem Deckel und der Führungsschiene gebildete Spalt immer zuverlässig abgedeckt ist. Da bei dieser Auslegungsform der Balgenteil nicht unmittelbar am Deckel oder dessen Rahmenteil befestigt zu werden braucht, erleichtert sich die Montage der Sichtblende. Insbesondere ist zur Federbelastung des Faltenbalgenteils ein Federelement vorgesehen, das zwei Schenkel hat, welche sich im wesentlichen in Längsrichtung des Balgenteils erstrecken, und die mit den jeweiligen oberen und unteren Enden des Faltenbalgenteils zusammenarbeiten. Vorzugsweise ist das Federelement als eine Formdrahtfeder ausgebildet.

Um bei einem solchen selbsttätig ausstellenden Faltenbalgenteil zu erreichen, daß wenigstens das oberere Ende des Faltenbalgenteils immer an einer vorbestimmten Stelle an der Unterseite des Deckels anliegt, kann dem oberen Ende des Faltenbalgenteils ein Hakenelement zugeordnet sein, durch das beispielsweise ein Schenkel des Federelements geht, und das formschüssig bei einem entsprechend vorspringenden Teil an der Unterseite des Deckels unter Unterstützung durch die Federkraft des Federelements einrastet. Hierdurch wird die Anlagestelle für das obere Ende des Faltenbalgenteils mittels den formschlüssig ineinandergreifenden Teilen fixiert.

Zur Verringerung der Bauhöhe des als Sichtblende dienenden ziehharmonikaartigen Faltenbalgteils und zur Verbesserung seiner Verwindungsschweifigkeit mit dem Ziel einer verbesserten seitlichen Stabilität gegen Windkräfte zeichnet sich eine alternative Ausgestaltungsform dadurch aus, daß der Faltenbalgteil wenigstens eine Stoffschicht aufweist, an welcher im Bereich der Balgenabschnitte sehr dünne, in Längsrichtung verlaufende Versteifungsstreifen, wechselseitig beabstandet, derart befestigt sind, daß zwischen jeweils zwei aufeinanderfolgenden Versteifungsstreifen die längsverlaufenden Balgenfalten gebildet werden. Bei dieser Ausgestaltungsform wird eine Stoffschicht mit Hilfe von Versteifungsstreifen versteift, wodurch dem Faltenbalgenteil eine Seitenstabilität verliehen wird, sodaß der Faltenbalgteil den Windkräften einen Widerstand entgegensetzt. Zum anderen wird auch erzielt, daß der Faltenbalgenteil in sich gesehen eine größere Eigenverwindunssteifigkeit als bei insgesamt aus Kunststoff ausgelegten Teilen hat, um eine verbesserte Funktionstüchtigkeit zu erzielen.Insbesondere aber hat der Faltenbalgteil im zusammengelegten Zustand, beispielsweise bei geschlossenem Deckel des Schiebedachs und/oder Schiebehebedachs eine äußerst geringe Bauhöhe. Somit ist diese Bauform des Faltenbalgteils äußerst flachbauend.

Vorzugsweise umfaßt hierbei der Balgenteil zwei Stoffschichten, und die Versteifungsstreifen sind zwischen den beiden Stoffschichten eingelegt. Mit einer solchen Ausgestaltungsform ist vorzugsweise die nach innen weisende Stoffschicht, d.h. jene Stoffschicht, die zum Fahrzeuginnenraum weist und bei entsprechender Stellung des Deckels von innen sichtbar ist, als Dekorschicht ausgebildet, die sich insbesondere hinsichtlich der Farbgebung an jene des Fahrzeuginnenraums anpassen läßt. Hierdurch erhält man insbesondere ein ansprechendes Äußeres einer Sichtblende für ein Schiebedach und/oder Schiebehebedach nach der Erfindung.

Bei einer Ausgestaltungsform des Faltenbalgteils aus zwei Stoffschichten und dazwischen liegenden Versteifungsstreifen läßt sich die Herstellung desselben insbesondere dadurch vereinfachen, daß die jeweils zugewandten Flächen der Stoffschichten selbstklebend sind. Bei der Herstellung eines solchen Faltenbalgteils werden dann die Versteifungsstreifen der jeweils gewünschten Anordnung unmittelbar mittels Kleben an den Stoffschichten festgelegt.

Vorzugsweise ist der Faltenbalgteil der vorstehend beschriebenen Art an einem erfindungsgemäßen Schiebedach und/oder Schiebehebedach über ein Tragteil gelenkig an der vorderen Innenseite des Deckels angebracht.Lediglich durch Ausnützung der Schwerkraft kann dann der Faltenbalgenteil als Sichtblende aufgefaltet werden, wenn bei einem Schiebedach der Deckel beispielsweise seine Aufstelllage einnimmt. Zur Verbindung des Faltenbalgenteils mit dem Tragteil ist vorzugsweise eine Klebeverbindung vorgesehen.

Als Versteifungsstreifen kommen bei dieser alternativen Ausgestaltungsform des Faltenbalgenteils der Sichtblende des Schiebedachs und/oder Schiebehebedachs nach der Erfindung sehr dünne Blechstreifen oder Streifen aus Kunsstoff in Betracht.

Die Erfindung wird nachstehend anhand eines bevorzugten Ausführungsbeispiels unter Bezugnahme auf die beigefügte

Zeichnung näher erläutert. Darin zeigt:
Fig. 1 eine Draufsicht auf ein Fahrzeugdach mit einem Schiebedach und/oder Schiebehebedach,
Fig.2 eine Seitenschnittansicht längs der Linie II-II in Fig. 1.
Fig.3 eine Schnittansicht längs der Linie III-III in Fig.2 ,
Fig.4a eine schematische Seitenansicht eines Ausschnitts in auseinandergezogenem Zustand,
Fig.4b eine Fig. 3a entsprechende Ansicht des Faltenbalgenteils im zusammengedrückten Zustand,
Fig.5 eine Seitenansicht einer Ausführungsvariante eines Faltenbalgenteils ,und
Fig.6 eine Draufsicht auf das in Fig. 5 gezeigte Faltenbalgenteil im ausgefalteten Zustand vor dem Einbau.

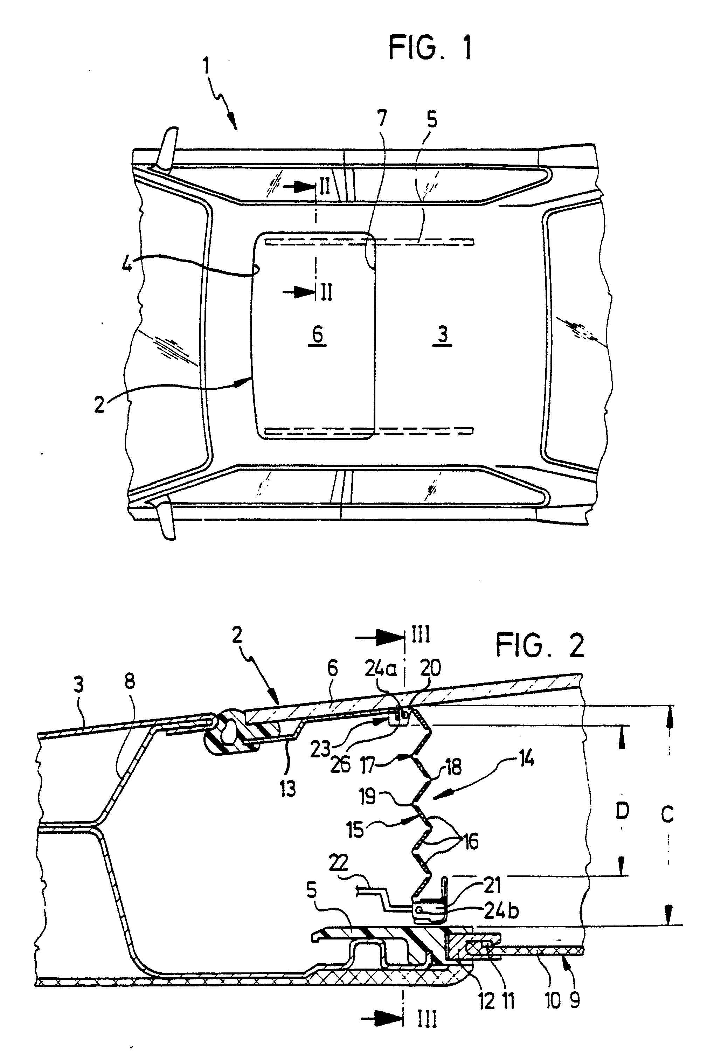

Wie aus den Fig. 1 und 2 zu ersehen ist, hat eine insgesamt mit 1 bezeichnetes Kraftfahrzeug beispielsweise eine gemäß der dargestellten Ausführungsform als Schiebehebedach 2 ausgebildetes Dachteil. In einem festen Dachteil 3 ist eine Dachöffnung 4 ausgebildet, längs deren beiden Längsseiten Führungsschienen 5 verlaufen. Ein Deckel 6 ist längs den Führungsschienen 5 verschiebbar, wobei der Deckel 6 in seiner Schließstellung die Dachöffnung 4 verschließt und nach Absenken seiner Hinterkante 7 unter das feste Dachteil 3 schiebbar ist. Bei der dargestellten bevorzugten Ausführungsform kann wahlweise die Hinterkante 7 des Deckels 6 über das feste Dachteil 3 ausgestellt werden.

Der Deckel kann aus einem lichtdurchlässigen oder durchscheinenden Werkstoff hergestellt, d.h. als sogenannter Glasdeckel, ausgebildet sein. Alternativ kann der Deckel 6 auch beispielsweise aus Stahlblech o.dgl. hergestellt sein, wobei er dann nicht lichtdurchlässig ist.

Wie insbesondere aus Fig. 2 zu ersehen ist, ist in die vom festen Dachteil 3 begrenzte Dachöffnung 4 ein umlaufender Rahmen 8 eingesetzt, welcher die Führungsschienen 5 und eine nicht näher dargestellte Antriebseinrichtung für die Bewegung des Deckels 6 trägt.

Wie ebenfalls in Fig. 2 dargestellt ist, kann in Richtung zum Fahrzeuginnenraum weisend ein Schiebehimmel 9 vorgesehen sein, welcher ebenfalls längsverschieblich an entsprechenden Führungen gelagert ist. Der Schiebehimmel 9 wird von einem Himmelteil 10 gebildet, das über eine Clipsverbindung 11 mit einem Tragteil 12 verbunden ist, welches längsverschieblich geführt ist.

Wenn der Deckel 6 von einem sogenannten Glasdeckel gebildet wird, kann er an seiner Innenseite von einem als Deckelinnen blech ausgebildeten Rahmenteil 13 getragen werden, an dem die erforderlichen Verbindungsglieder mit dem nicht näher dargestellten Dachantrieb gelagert sind.

Insbesondere unter Bezugnahme auf Fig. 2 wird nachstehend eine flexible, ziehharmonikaartige Sichtblende 14 näher erläutert. Diese Sichtblende dient zur Abdeckung eines Spalts C zwischen der Unterseite des Deckels 6 und der Führungsschiene 5. Sowohl in der ausgestellten Lage des Deckels 6, die nicht näher dargestellt ist, als auch in der Schließstellung desselben wird ein Raum D gebildet, in dem vom Fahrgastraum aus hineingegriffen werden kann, wenn keine besonderen Vorkehrungen getroffen sind. Der Spalt C zwischen dem Deckel 6 und der Führungsschiene 5 ändert sich in Abhängigkeit von der Höhenlage des Deckels 6. In Fig. 2 nimmt der Deckel 6 in etwa seine Schließstellung ein, in welcher der Spalt C seine durchschnittliche Größe hat, während der Spalt C bei ausgestelltem Deckel 6 größer und bei in seine Öffnungsstellung verschobenem Deckel 6 etwas kleiner ist. Somit nimmt die Sichtblende 14 in Fig.2 eine durchschnittliche Mittelstellung ein, in der diese weder vollständig ausgezogen noch vollständig zusammengedrückt ist.

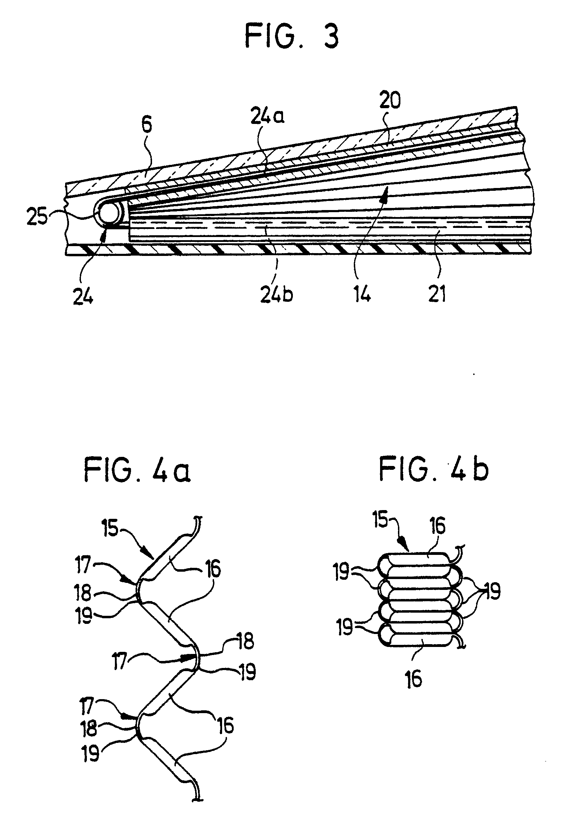

Die Sichtblende 14 wird von einem insgesamt mit 15 bezeichneten Balgenteil 15 gebildet. Wie sich aus Fig. 2 in Verbindung mit den Fig. 4a und/oder 4b ergibt, umfaßt dieser Balgenteil 15 Balgenabschnitte 16, die jeweils eine übereinstimmende Querschnittsdicke haben, und welche über Übergangsabschnitte 17 jeweils miteinander verbunden sind, welche die jeweiligen Balgenfalten 18 bilden, die in Längsrichtung des Balgenteils 15 verlaufen. Diese Übergangsabschnitte 17 weisen im Querschnitt eine im Vergleich zu den Balgenabschnitten 16 wesentlich reduzierte Dicke auf, so daß sie Stegteile 19 bilden, die scharnierartig beim Zusammendrücken und Auseinanderziehen des Balgenteils 15 wirken.

In Fig. 4a ist ein Ausschnitt des Balgenteils 15 gesondert in einer Seitenansicht gezeigt, wobei das Balgenteil 15 in teilweise auseinandergezogener Stellung gezeigt ist. In Fig.4b hingegen ist der Balgenteil 15 in seiner vollständig zusammengedrückten Stellung gezeigt,die er beispielsweise dann einnimmt, wenn der Deckel längs den Führungsschienen 5 nach Absenken seiner Hinterkante wenigstens teilweise unter das feste Dachteil 3 verschoben wird und der Spalt C am kleinsten ist.

Wie insbesondere aus Fig. 3a zu ersehen ist, liegen in diesem zusammengedrückten Zustand die Balgenabschnitte 16 des Balgenteils 15 flächig aufeinander und die als Stegteile 19 ausgebildeten Übergangsabschnitte 17 mit verminderter Querschnittsdicke bilden Verbindungsgelenke, die abwechselnd an der Innenseite und der Außenseite des Balgenteils 15 vorgesehen sind. Somit ist die Bauhöhe des Balgenteils 15 im vollständig zusammengedrückten Zustand desselben ausschließlich durch die Anzahl und die jeweilige Querschnittsdikke der Balgenabschnitte 16 bestimmt, während die Übergangsabschnitte 17 hierauf keinen Einfluß haben, da diese lediglich eine scharnierartige Gelenkverbindung an den Übergangsstellen bilden. Diese in der Querschnittsdicke reduzierten Übergangsabschnitte 17 ermöglichen, daß der Balgenteil 15 mit relativ geringen Betätigungskräften gegebenenfalls zur Anpassung an die jeweilige Stellung des Deckels 6 und die Größe des Spalts C mehr oder weniger auseinandergezogen werden kann. Ferner läßt sich der Balgenteil 15 gemäß der vorstehend erläuterten bevorzugten Ausführungsform auch bei sogenannten flachbauenden Schiebedächern und/oder Schiebehebedächern 2 als Sichtblende 14 verwenden, da dank dieser Auslegung der Balgenteil 15 in zusammengedrücktem Zustand eine äußerst geringe Bauhöhe hat.

Wie insbesondere aus Fig. 2 zu ersehen ist, ist das obere Ende 20, d.h. das dem Deckel 6 zugewandte Ende des Balgenteils 15 und/oder das untere Ende 21, d.h. das der Führungsschiene 5 zugewandt liegende Ende des Balgenteils 15, im Quer schnitt dicker ausgeführt, so daß diese Enden 20, 21 an sich steifer und starrer sind und als Auflageteile und/oder Halteteile für den Balgenteil 15 der Sichtblende 14 genutzt werden können. Das untere, verdickte Ende 21 des Balgenteils 15 ist nach Fig. 2 an einem Führungsbügel 22 gehalten, der beispielsweise zweckmäßigerweise nur am vorderen Teil (nicht näher dargestellt) an der Unterseite bzw. Innenseite des Deckels 6 befestigt ist. Durch diese Befestigung wird der Balgenteil 15 der Sichtblende 14 mit Hilfe des Führungsbügels 22 bei der Bewegung des Deckels 6 in entsprechender Weise mitgenommen, um in jeder Stellung des Deckels 6 den jeweils gebildeten Spalt C derart abzudecken, daß die dahinterliegenden Funktionsteile des Schiebehebedachs 2 nicht sichtbar sind.

Unter Bezugnahme auf die Fig. 2 und 3 ist eine bevorzugte Ausgestaltungsform der Sichtblende 14 gezeigt. Diese Sichtblende 14 kann sich ohne eine mechanische Verbindung mit der Unterseite des Deckels 6 selbsttätig entsprechend der jeweiligen Öffnungsstellung des Deckels 6 an diesen anlegen. Der Faltenbalgenteil 15 wird hierbei unterstützt durch eine Federkraft, in die jeweilige Spreizstellung zum Abdecken des Spalts C automatisch gebracht. Hierzu ist ein Federelement 24 vorgesehen, das sich im wesentlichen in Längsrichtung des Faltenbalgenteils 15 erstreckt. Das Federelement 24 hat zwei ebenfalls in Längsrichtung des Faltenbalgenteils 15 verlaufende Schenkel 24a, 24b, die mit dem oberen Ende 20 und dem unteren Ende 21 des Balgenteils 15 zusammenarbeiten. Diese Schenkel 24a, 24b sind zweckmäßigerweise in die jeweils verdickt ausgebildeten oberen und unteren Enden 20, 21 des Faltenbalgenteils 15 eingelegt. Wie insbesondere aus Fig. 3 zu ersehen ist, ist das Federelement 24 in Form einer Formdrahtfeder 25 ausgelegt.

Um die Anlagestelle des oberen Endes 20 des Balgenteils 15 an der Unterseite bzw. Innenseite des Deckels 6 und/oder dessen Rahmenteils 13 in vorbestimmter Weise vorzugeben, ist eine formschlüssige Verbindung 23 am oberen Ende 20 des Balgenteils 15 vorgesehen. Am oberen Ende 20 des Balgenteils 15 ist ein Hakenteil 26 angebracht, das in der jeweiligen Auszugsstellung der Sichtblende 14 in ein vorspringendes Teil an der Unterseite des Deckels einrastet. In dieses Hakenteil 26 kann der eine Schenkel 24a des Federelements 24 eingesetzt sein.

Bei dieser Ausgestaltungsform der Sichtblende 14 benötigt man keine unmittelbare Befestigung des oberen Endes 20 des Balgenteils 15 am Deckel 6 oder dessen Rahmenteil 13. Daher läßt sich eine derartige Sichtblende 14 unter Vereinfachung der Montage bei dem Schiebehebedach 2 einbauen.

Eine entsprechende automatische Ausstellung der Sichtblende und/oder des Faltenbalgenteils 15 läßt sich auch dadurch erzielen, daß man den Balgenfalten 18 unter entsprechender Materialwahl o.dgl. eine geeignete Eigensteifigkeit verleiht.

Um eine sichere Anlage des oberen, verdickten Endes 20 an der Unterseite des Deckels 6 in jeder Betriebsstellung desselben sicherzustellen, kann dieses obere Ende 20 des Balgenteils 15 auch am Rahmenteil 13 festgelegt und gegen die Unterseite des Deckels 6 angedrückt werden. Anstatt einer Befestigung kann entsprechend Fig. 2 eine formschlüssige Verbindung 23 vorgesehen sein, mittels der der Balgenteil 15 an seinem oberen Ende 20 zuverlässig an der Innenseite des Deckels 6 in jeder jeweiligen Ausstellung anliegt.

Natürlich braucht der in Fig. 2 dargestellte Schiebehimmel 9 nicht notwendigerweise vorgesehen zu werden, sondern hierbei handelt es sich um ein wählbares Zusatzteil.

Auch ist die Ausbildung des Balgenteils 15 der Sichtblende 14 nicht auf die in den Figuren der Zeichnung dargestellten Einzelheiten beschränkt, sondern in Abhängigkeit von den jeweils vorhandenen Erfordernissen können auch beispielsweise die Querschnittsdicken der Balgabschnitt 16 unterschiedlich gewählt sein, wobei aber allen diesen möglichen Ausführungsvarianten gemeinsam ist, daß die Balgenabschnitte 16 über scharnierartig wirkende Stegteile 19 zur Reduzierung der Bauhöhe des Balgenteiles 15 verbunden sind.

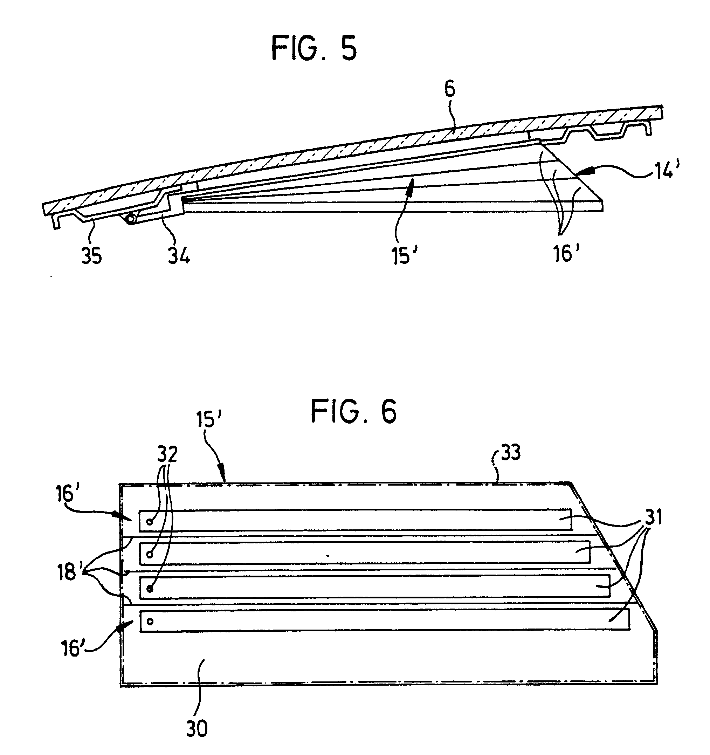

Anhand den Figuren 5 und 6 wird eine alternative Ausführungsform eines Faltenbalgteils gezeigt, das zur Unterscheidung zu den voranstehend beschriebenen Ausführungsformen insgesamt mit 15' bezeichnet ist.Dieses Faltenbalgenteil 15' dient als Sichtblende 14', wie dies im Zusammenhang mit den voranstehend beschriebenen Ausführungsformen erläutert worden ist. In Fig. 6 ist der Faltenbalgenteil 15' im aufgefalteten Zustand vor dem Einbau in ein Schiebedach und/oder Schiebehebedach gezeigt. Auf einer ersten Stoffschicht 30 sind beim dargestellten Beispiel 4 in Längsrichtung verlaufende Versteifungsstreifen 31 aufgelegt und. fest mit der ersten Stoffschicht 30 verbunden. Die Versteifungsstreifen 31 haben wechselseitig zueinander einen derartigen Abstand, daß zwischen jeweils zweiaufeinanderfolgenden Versteifungsstreifen 31 im eingebauten Zustand des Faltenbalgenteils 15' Balgenfalten 18' gebildet werden. Die Versteifungsstreifen 31 erstrecken sich somit über den Bereich der beiden Abschnitte 16' des Balgenteils 15'. Auf einer Seite, in den Figuren 5 und 6 auf der links liegenden Seite, haben die Versteifungsstreifen 31 Öffnungen 32 , durch welche ein starres Teil, wie ein Stift oder Bolzen nach dem Falten des Faltenbalgenteils 15' durchgefädelt werden kann. Dies ist insbesondere im Hinblick auf die Montage und Demontage zweckmäßig, da damit der Faltenbalgenteil 15' als Einheit im gefalteten Zustand zusammenbleibt.Zum anderen werden hierdurch auch seitliche Verlagerungen der Versteifungsstreifen 31 im eingebauten Zustand verhindert, sodaß man eine ausreichende seitliche Stabilität gegen Windfkräfte im eingebauten Zustand der Sichtblende 14' erhält.

Wenn die erste Stoffschicht 30 jene Stoffschicht ist, die im eingebauten Zustand der Sichtblende 14 nach innen weist, kann sie als Dekorschicht ausgebildet werden und an die jeweilige Farbgebung des Fahrzeuginnenraums angepaßt werden, um ein ansprechendes Äußeres der Sichtblende 14 zu erreichen.

Auf die in Fig. 6 gezeigte Anordnung von erster Stoffschicht 30 und Versteifungsstreifen 31 kann eine zweite Stoffschicht 33 aufgelegt werden. Zur vereinfachten Herstellung eines derartigen Balgenteils 15' können hierbei Stoffschichten 30 und 33 verwendet werden, die auf einer Seite selbstklebend sind, sodaß sie sich lediglich durch Aufeinanderlegen und Aneinanderdrücken zu einer Einheit fest verbinden lassen, wobei die Versteifungsstreifen 31 als Zwischenlage zwischen den beiden Stoffschichten 30, 33 angeordnet sind.

In Figur 5 ist die Sichtblende 14' in einem teilweise aufgefalteten Zustand gezeigt. Der Balgenteil 15' ist an einem Tragteil 34 zweckmäßigerweise mittels Ankleben befestigt, das seinerseits beispielsweise an einem Deckelinnenblech 35 angelenkt ist. Diese Anlenkung ist vorzugsweise im vorderen Bereich des Deckels 6 vorgesehen. Die Sichtblende 14' wird zweckmäßigerweise mit Hilfe eines Führungsteils , das nicht näher dargestellt ist, mit der Bewegungsmechanik des Schiebedachs und/oder Schiebehebdachs mitgenommen, wobei diese Führung vorzugsweise im untern Bereich des Schiebedachs oder Schiebehebdachs vorgesehen ist.


BEZUGSZEICHEN


1 Kraftfahrzeug insgesamt
2 Schiebehebedach insgesamt
3 festes Dachteil
4 Dachöffnung
5 Führungsschienen
6 Deckel
7 Hinterteile desselben
8 Rahmen
9 Schiebehimmel
10 Himmelteil
11 Clipsverbindung
12 Tragteil des Schiebehimmels 9
13 Rahmenteil des Deckels 6
14, 14' Sichtblenden insgesamt in den Figuren 5 und 6
15, 15' Balgenteil
16, 16' Balgenabschnitte
17, 17' Übergangsabschnitte
18, 18' Balgenfalten
19 Stegteile
20 oberes Ende des Balgenteils 15
21 unteres Ende des Balgenteils 15
22 Führungsbügel
23 formschlüssige Verbindung
24 Federelement
24a Schenkel
24b Schenkel
25 Formdrahtfeder
26 Nabenteil am oberen Ende 20
C Spalt zwischen dem Deckel 6 und der Führungsschiene 5
D Raum, in den vom Fahrgastraum aus hineingegriffen werden kann.
30 erste Stoffschicht
31 Versteifungsstreifen
32 Öffnungen
33 zweite Stoffschicht
34 Tragteil
35 Deckelinnenblech

**Ansprüche**

1. Schiebedach und/oder Schiebehebedach, insbesondere für Kraftfahrzeuge, mit einer im festen Dachteil ausgebildeten Dachöffnung, an gegenüberliegenden Seiten der Dachöffnung verlaufenden Führungsschienen und einem Deckel, der in seiner Schließstellung die Dachöffnung verschließt, der nach Absenken seiner Hinterkante entlang den Führungsschienen mindestens teilweise unter das feste Dachteil schiebbar ist und der gegebenenfalls wahlweise mit seiner Hinterkante über das feste Dachteil ausstellbar ist, wobei an beiden Seiten des Deckels eine sich beim Verstellen der Deckelhinterkante in lotrechter Richtung flexibel verformende Sichtblende in Form eines ziehharmonikaartigen Faltenbalgenteils mit längs verlaufenden Balgenfalten zum Abdecken des zwischen der Deckelunterseite und den Führungsschienen gebildeten Spalts angebracht ist, dadurch **gekennzeichnet,** daß die längs verlaufenden Balgenfalten (18) von im Vergleich zu den Balgenabschnitten (16) im Querschnitt dünneren Übergangsabschnitten (17) zwischen jeweils zwei aufeinanderfolgenden Balgenabschnitten (16) gebildet werden.

2. Schiebedach und/oder Schiebehebedach nach Anspruch 1, dadurch gekennzeichnet, daß die Übergangsabschnitte (17) als dünne, scharnierartig wirkende Stegteile (19) ausgebildet sind.

3. Schiebedach und/oder Schiebehebedach nach Anspruch 1 oder 2, dadurch gekennzeichnet, daß die Balgenabschnitte (16) im zusammengedrückten Zustand flächig aufeinanderliegen.

4. Schiebedach und/oder Schiebehebedach nach einem der Ansprüche 1 bis 3, dadurch gekennzeichnet, daß das der Führungsschiene (5) zugewandte, untere Ende (21) und/oder das der Unterseite bzw. Innenseite des Deckels (6) zugewandte obere Ende (20) des Balgenteils (15) verdickt ausgebildet sind.

5. Schiebedach und/oder Schiebehebedach nach Anspruch 4, dadurch gekennzeichnet, daß das untere Ende (21) des Balgenteils (15) an einem Führungsbügel (22) gehalten ist, der nur am vorderen Teil der Unterseite bzw. Innenseite des Deckels (6) befestigt ist.

6. Schiebedach und/oder Schiebehebedach nach einem der Ansprüche 1 bis 4, dadurch gekennzeichnet, daß der ziehharmonikaartige Faltenbalgteil (15) entsprechend des Ausstellzustands des Deckels (6) mittels Federbelastung selbsttätig in die jeweilige Spreizstellung bringbar ist.

7. Schiebedach und/oder Schiebehebedach nach Anspruch 6, dadurch gekennzeichnet, daß zur Federbelastung ein Federelement (24) vorgesehen ist, dessen Schenkel (24a, 24b) im wesentlichen in Längsrichtung des Balgenteils (15) verlaufen.

8. Schiebedach und/oder Schiebehebedach nach Anspruch 7, dadurch gekennzeichnet, daß die Schenkel (24a, 24b) des Federelements das obere und das untere Ende (20, 21) des Balgenteils (15) beaufschlagen.

9. Schiebedach und/oder Schiebehebedach nach einem der Ansprüche 6 bis 8 dadurch gekennzeichnet, daß zur Federbeaufschlagung eine Formdrahtfeder (25) vorgesehen ist.

10. Schiebedach und/oder Schiebehebedach nach einem der Ansprüche 6 bis 9 dadurch gekennzeichnet, daß am oberen Ende (20) des Balgenteils (15) ein mit der Innenseite des Deckels (6) zusammenarbeitendes Nabenteil (26) vorgesehen ist.

11. Schiebedach und/oder Schiebehebedach nach Anspruch 1 dadurch gekennzeichnet, daß der Faltenbalgteil (15') wenigstens eine Stoffschicht (30;33) aufweist, an welcher im Bereich der Balgenabschnitte (16') in Längsrichtung verlaufende Versteifungsstreifen (31) wechselseitig beabstandet derart befestigt sind, daß zwischen zwei aufeinanderfolgenden Versteifungsstreifen (31) die längs verlaufenden Balgenfalten (18) gebildet werden.

12. Schiebedach und/oder Schiebehebedach nach Anspruch 1 dadurch gekennzeichnet, daß der Balgenteil (15') zwei Stoffschichten (30, 33) umfaßt und die Versteifungsstreifen zwischen denselben angeordnet sind.

13. Schiebedach und/oder Schiebehebedach nach Anspruch 11 oder 12 dadurch gekennzeichnet, daß die Stoffschichten (30,33) an den jeweils zugewandten Flächen selbstklebend sind.

14. Schiebedach und/oder Schiebehebedach nach einem der Ansprüche 11 bis 13 gekennzeichnet, daß die Versteifungsstreifen (31) an der oder den Stoffschicht(en) (30,33) angeklebt sind.

15. Schiebedach und/oder Schiebehebedach nach einem der Ansprüche 11 bis 14 dadurch gekennzeichnet, daß der Faltenbalgteil (15') über ein Tragteil (34) gelenkig an der vorderen Innenseite (35) des Deckels angebracht ist.

16. Schiebedach und/oder Schiebehebedach nach Anspruch 15 dadurch gekennzeichnet, daß der Faltenbalgteil (15') am Tragteil (34) angeklebt ist.

17. Schiebedach und/oder Schiebehebedach nach einem der Ansprüche 11 bis 16 dadurch gekennzeichnet, daß die Versteifungsstreifen (31) aus Metall bestehen.

18. Schiebedach und/oder Schiebehebedach nach einem der Ansprüche 11 bis 16 dadurch gekennzeicht, daß die Versteifungsstreifen (31) aus Kunststoff bestehen.

## FIG. 1

## FIG. 2

# FIG. 3

# FIG. 4a

# FIG. 4b

# FIG. 5

# FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | DE - A1 - 3 308 065 <br> (WEBASTO-WERK W. BAIER GMBH) <br> * Gesamt * | 1,3,4, 5 | B 60 J 7/04 |
| A | DE - A1 - 3 442 617 <br> (WEBASTO-WERK W. BAIER GMBH, DAIMLER-BENZ AG) <br> * Gesamt * | 1,6,9, 11 | |
| A | DE - A1 - 3 641 033 <br> (KAROSSERIEWERKE WEINSBERG GMBH) <br> * Gesamt * | 1,6 | |
| A | DE - A1 - 3 419 900 <br> (KAROSSERIEWERKE WEINSBERG GMBH) <br> * Fig. 1 * | 1,6 | |
| A | DE - A1 - 2 827 889 <br> (WEBASTO-WERK W. BAIER GMBH) <br> * Gesamt * | 1 | |

RECHERCHIERTE SACHGEBIETE (Int Cl⁵)

B 60 J

Der vorliegende Recherchenbericht wurde für alle Patentansprüche erstellt

| Recherchenort | Abschlußdatum der Recherche | Prüfer |
|---|---|---|
| WIEN | 17-12-1990 | SCHMICKL |